(19) **Europäisches Patentamt**

**European Patent Office**

**Office européen des brevets**

(11) **EP 0 816 288 B1**

(12) **EUROPÄISCHE PATENTSCHRIFT**

(45) Veröffentlichungstag und Bekanntmachung des Hinweises auf die Patenterteilung:
**26.01.2000 Patentblatt 2000/04**

(51) Int Cl.$^7$: **C01B 25/455**

(21) Anmeldenummer: **97109918.9**

(22) Anmeldetag: **18.06.1997**

(54) **Herstellung von Lithiumhexafluormetallaten**

Preparation of lithiumhexafluorometallates

Préparation de l'hexafluorométallates de lithium

(84) Benannte Vertragsstaaten:
**AT BE CH DE DK ES FI FR GB GR IE IT LI LU NL PT SE**

(30) Priorität: **26.06.1996 DE 19625529**
**27.03.1997 DE 19712988**

(43) Veröffentlichungstag der Anmeldung:
**07.01.1998 Patentblatt 1998/02**

(73) Patentinhaber: **Solvay Fluor und Derivate GmbH D-30173 Hannover (DE)**

(72) Erfinder:
• **Schulz, Alf**
**30900 Wedemark (DE)**
• **Seffer, Dirk**
**31535 Neustadt (DE)**
• **Rieland, Matthias**
**30539 Hannover (DE)**
• **Rudolph, Werner**
**30559 Hannover (DE)**

(74) Vertreter: **Lauer, Dieter, Dr.**
**Solvay Pharmaceuticals GmbH,**
**Hans-Böckler-Allee 20**
**30173 Hannover (DE)**

(56) Entgegenhaltungen:
**US-A- 3 607 020     US-A- 3 925 539**

## Beschreibung

Das Verfahren bezieht sich auf die Herstellung von Hexafluorphosphaten und Hexafluorarsenaten des Lithiums.

Lithiumhexafluorphosphat und Lithiumhexafluorarsenat können als Leitsalze für Batterien verwendet werden, siehe US-A 5,427,874.

Aufgabe der vorliegenden Erfindung ist es, ein Verfahren anzugeben, mit welchem Lithiumhexafluorphosphat bzw. Lithiumhexafluorarsenat auf technisch einfache, gut steuerbare Weise hergestellt werden können. Diese Aufgabe wird durch das in den Ansprüchen angegebene Verfahren gelöst. Das erfindungsgemäße Verfahren zur Herstellung von Verbindungen der Formel $LiMF_6$, worin M für P oder As steht, sieht vor, daß man ein Reaktionsprodukt erzeugt durch Umsetzung von $MX_3$, worin M die obengenannte Bedeutung besitzt und X Fluor, Chlor oder Brom bedeutet, mit elementarem Chlor, Brom oder Jod sowie HF und man das Reaktionsprodukt gleichzeitig oder anschließend mit einem Lithiumhalogenid kontaktiert.

Bevorzugt stellt man $LiPF_6$ her. Vorzugsweise geht man aus von Phosphortrichlorid, Phosphortribromid, Arsentrichlorid, Arsentribromid, insbesondere von Phosphortrichlorid. Man kann natürlich auch Gemische der Phosphorverbindungen bzw. Gemische der Arsenverbindungen einsetzen. Die Oxidation nimmt man vorzugsweise mit elementarem Chlor oder Brom, insbesondere mit elementarem Chlor vor. Als Lithiumhalogenid kann LiF, LiCl, LiBr und LiJ oder deren Gemische eingesetzt werden. Das Lithiumhalogenid, insbesondere LiF, kann auch in situ gebildet werden. Bevorzugt sind LiF und LiCl. Anhand einer der beiden bevorzugten Ausführungsformen, der Verwendung von LiF, wird die Erfindung weiter erläutert. Stöchiometrisch werden für 1 Mol der dreiwertigen Ausgangsverbindung 1 Mol Oxidationsmittel und 1 Mol LiF benötigt. Die dreiwertige Ausgangsverbindung, aber auch das Oxidationsmittel, können gewünschtenfalls im stöchiometrischen Überschuß eingesetzt werden. Das Molverhältnis von dreiwertiger Ausgangsverbindung $MX_3$ und Oxidationsmittel (Chlor, Brom, Jod) liegt zweckmäßig im Bereich von 1:0,85 bis 0,85:1. Sofern einer der Reaktanten im Überschuß vorliegt, wird er bei kontinuierlicher Verfahrensweise eventuell aus dem Reaktor ausgetragen. Es ist möglich, die im Überschuß eingesetzte Phosphor- oder Arsenverbindung bzw. das Halogen durch geeignete Maßnahmen aus dem $PF_5$ bzw. $AsF_5$ vor einer nachgeschalteten Reaktion mit LiF abzutrennen, beispielsweise durch Ausfrieren oder Gaswäsche.

Pro auszutauschendem Halogenatom wird ein Molekül HF benötigt. Soll z. B. 1 Mol $PCl_3$, oxidiert mit 1 Mol $Cl_2$ zu $PCl_5$, in $PF_5$ überführt werden, (das dann mit LiF weiterreagiert), werden 5 Mol HF benötigt. Fluorwasserstoff kann auch im Überschuß eingesetzt werden, es fungiert dann als Lösemittel. Es können auch andere inerte Lösemittel, insbesondere für LiF, eingesetzt werden, z.B. $CH_3CN$.

Die Temperatur der Oxidationsreaktion bei der Herstellung des Reaktionsproduktes liegt vorteilhaft im Bereich von -100 °C bis +100 °C, vorzugsweise im Bereich von -25 °C bis 40 °C.

Man kann unter Überdruck, z. B. im Autoklaven, oder auch bei Umgebungsdruck arbeiten. Die batchweise oder kontinuierliche Durchführung ist möglich.

Die Kontaktierung mit LiF kann nach Art einer Gas-Feststoff-Reaktion oder Gas-Flüssigkeits-Reaktion durchgeführt werden. Sie kann so vorgenommen werden, daß man die Herstellung des Reaktionsproduktes durch Oxidation der dreiwertigen Ausgangsverbindung sowie die Umsetzung mit HF in Anwesenheit von gleichzeitig vorliegendem LiF vornimmt. Man kann auch zunächst die Umsetzung zum Reaktionsprodukt aus den Ausgangsverbindungen durchführen und dann ohne weitere Isolierung des $PF_5$ oder $AsF_5$ LiF zugeben. Außerdem ist es möglich, bei der Umsetzung der Ausgangsverbindungen entstehende Produkte (die entsprechenden Metallpentafluoride im Gemisch mit HCl) gasförmig aus dem verwendeten Reaktor auszutragen und mit LiF zu kontaktieren. Dabei kann das LiF als Feststoff oder in Form einer Lösung, z. B. in HF, vorliegen.

Vorteil des erfindungsgemäßen Verfahrens ist, daß man - unter Verzicht auf die Verwendung von aggressivem elementarem Fluor - gut dosierbare Ausgangsverbindungen verwendet und gewünschtenfalls durch Dosieren der Reaktanten, z. B. der dreiwertigen Ausgangsverbindung oder des Oxidationsmittels die Reaktion steuern kann.

Die folgenden Beispiele sollen die Erfindung weiter erläutern, ohne sie in ihrem Umfang einzuschränken.

## Beispiele

### Beispiel 1:

Herstellung von $LiAsF_6$

Reaktion:

$$AsCl_3 + 5HF + LiF + Cl_2 \rightarrow LiAsF_6 + 5HCl$$

Ansatz:

| | |
|---|---|
| $AsCl_3$ (181,3 g Mol) d = 2,16 g/cm$^3$ | 25 ml |
| HF (20 g/Mol) d = 1 g/cm$^3$ | 80 ml |
| LiF (196 g/Mol) 0,3 Mol | 7,8 g |
| $Cl_2$ (35,5 g/Mol) | 21 g |

Durchführung:

Die Herstellung erfolgte im 250 ml Autoklaven mit Tefloninliner. HF wurde auf Trockeneis vorgekühlt. Der Autoklav wurde ebenfalls (unter Stickstoffspülung) im Trockeneisbad vorgekühlt. HF und LiF wurden im Autoklaven vereinigt und $AsCl_3$ dazugegeben. Anschließend der Autoklav verschlossen und dann bei einer Innentemperatur von -50 °C Chlor zudosiert, dabei stieg die Temperatur auf -30 °C. Dann wurde der Autoklav auf den Magnetrührer gestellt und bei Rührung auf Umgebungstemperatur erwärmt. Nach 3 Stunden stellte sich bei 23 °C ein Druck von 32 bar ein. Das Reaktionsgemisch wurde über Nacht stehengelassen. Dann wurde in 30 Minuten das Abgas abgeblasen und die überstehende HF mit der Wasserstrahlpumpe über die Gasphase abgesaugt (3½ Std.). Anschließend wurde LiAsF$_6$ als ein weißer, kristalliner Feststoff isoliert. Die Ausbeute, bezogen auf LiF, betrug 46,6 %.

**Beispiel 2:**

Herstellung von LiAsF$_6$

| Ausgangsprodukte | | |
|---|---|---|
| ⇒ Arsentrichlorid | Masse | 53,5 g = 0,294 mol (kompletter Inhalt des Glaszylinders) |
| ⇒ Fluorwasserstoff (hochrein) | Masse | 82,6 g = 4,13 mol, z. Umsetzung mit d. $AsCl_3$; Überschuß von 2,66 mol = 181,0 % |
| ⇒ Chlor / $Cl_2$ | Masse | 26,2 g = 0,37 mol, Überschuß von 0,076 mol (wegen Dosierung) |
| ⇒ Lithiumfluorid | Masse | 5,1 g = 0,2 mol |
| ⇒ Kalilauge / KOH 20%ig | Masse | 1055,4 g = (hergestellt aus KOH-Plätzchen 85%ig + destilliertem Wasser) |

Versuchsdurchführung

Die eingesetzten Gefäße wurden im Trockenschrank getrocknet. Im Laborautoklav wurden diesmal das Arsentrichlorid und das Lithiumfluorid vorgelegt. Der Autoklav wurde verschlossen und im Thermobehälter heruntergekühlt. Nachfolgend bei -30 °C der Fluorwasserstoff über Kopf und das Chlor während einer Zeitdauer von 8 Minuten über Tauchrohr eindosiert, dabei lag die Temperatur im Autoklaven bei -29 °C bis -24 °C. Der Autoklav wurde dann langsam erwärmt, bis zu einer Temperatur von +19,4 °C mittels Thermobehälter und Kryomat dann bei Raumtemperatur. Dabei erfolgte insgesamt ein Druckanstieg bis auf 31,5 bar. Der Druck stieg auch über Nacht nicht weiter an. Die höchste ermittelte Temperatur während der Umsetzung lag bei +26,7 °C. Nach Versuchsende wurde die Gasphase in einen Abgaswäscher gepurgt, im Anschluß wurde der Autoklav mit Argon gespült.

Nach Ende des Ausblasens mit Argon wurde das Lithiumhexafluoroarsenat filtriert und dann das Filtrationsgefäß aus PVDF mit Argon gespült. Zur Produktentnahme wurde das Filtrationsgefäß in die Glovebox eingebracht und das Produkt entnommen.

Das erhaltene Produkt raucht nicht in der Glovebox unter Stickstoffspülung. Das LiAsF$_6$ wurde ausgewogen, Ausbeute: 25,9 g.

### Beispiel 3:

Herstellung von Lithiumhexafluorophosphat durch Einleiten von $PF_5$ in eine LiF/HF-Lösung

Reaktionsgleichungen

$$PCl_3 + Cl_2 + 5\,HF \rightarrow PF_5 + 5\,HCl$$

$$PF_5 + LiF \rightarrow LiPF_6$$

| Ausgangsprodukte | | |
|---|---|---|
| Phosphortrichlorid | Masse | 61,8 g = 0,45 mol |
| Fluorwasserstoff (hochrein) | Masse | 76,9 g = 3,84 mol, zur Umsetzung mit d. $PCl_3$; Überschuß von 1,59 mol = 70,7 % |
| Chlor/$Cl_2$ | Masse | 40,0 g = 0,56 mol |
| Lithiumfluorid | Masse | 7,8 g = 0,3 mol |
| Fluorwasserstoff (hochrein) LiF/HF-Lösung: 2,2 Gew.-% | Masse | 351,4 g = 17,56 mol, dient nur als Lösemittel für das LiF |

Versuchsdurchführung

Die eingesetzten Gefäße wurden im Trockenschrank getrocknet. Im Laborautoklav wurde das Phosphortrichlorid vorgelegt und mehr als die äquivalent benötigte Menge an Fluorwasserstoff (mit $N_2$-Polster) langsam eindosiert (Masse: 76,9 g). Die Temperaturen im Laborautoklaven während der nachfolgenden kontinuierlichen Chlordosierung im offenen System (Dauer: 355 min) lagen zwischen -65,7 °C und -21,7 °C. Dabei kam es zum Austrag an Feststoff aus dem Autoklaven. Das während der Reaktion entstehende Gasgemisch wurde durch einen Kühler (Reaktionsgaskühler aus PFA-Schlauch und Dewar-Gefäß mit Trockeneis/Methanol-Gemisch) und eine gekühlte Sicherheitsflasche hindurch direkt in die LiF/HF-Lösung geleitet. Lediglich über Nacht wurde die Dosierung unterbrochen und der Autoklav auf ca. -67 °C temperiert und alle Ventile geblockt. Am nächsten Tag wurde die Chlordosierung fortgesetzt und dabei die Temperatur im Autoklaven langsam erhöht. Nach Ende der Chlordosierung wurde die Temperatur im Autoklaven bis auf 1,3 °C erhöht und das entweichende Gasgemisch fortwährend in die LiF/HF-Lösung geleitet.

Die Temperatur der LiF/HF-Lösung lag während der Einleitung des Gasgemisches zwischen -66,8 °C und -61,4 °C. Nach Versuchsende wurde das entstandene Lithiumhexafluorophosphat noch umkristallisiert. Dabei wurde die Temperatur bis auf -7,5 °C erhöht, nach der Abkühlung bis auf -65,1 °C und nach ca. 17 Stunden erfolgte die Filtration (Druckpolster: Argon, da Entnahme über Tauchrohr). Das Filtrat lief zügig durch den Filter. Es blieb kein Rückstand im PVDF-Gefäß zurück. Nach Filtrationsende wurde das Filtrationsgefäß zunächst mit 10 % Fluor/90 % Stickstoff-Gasgemisch (65 min.) und dann 21 h 35 min. mit Argon gespült. Das Filtrationsgefäß mit dem Produkt wurde in die Glovebox überführt und das Produkt entnommen.

Das erhaltene sehr feine rieselfähige schneeweiße Produkt raucht nicht in der Glovebox unter Stickstoffspülung. Das $LiPF_6$ wurde ausgewogen, Ausbeute: 0,8 g.

Die Ausbeute kann durch Verwendung einer höherkonzentrierten LiF/HF-Lösung und Einengen vor dem Filtrieren noch verbessert werden.

### Beispiel 4:

Die Herstellung von $LiPF_6$ unter Gas-Feststoffreaktion

| Ausgangsprodukte | | | |
|---|---|---|---|
| a) | Phosphortrichlorid | Masse | 45,0 g = 0,33 mol |
| | HF | Masse | 117,3 g = 5,86 mol |

(fortgesetzt)

| Ausgangsprodukte | | | |
|---|---|---|---|
| | $Cl_2$ | Masse | 25,5 g = 0,36 mol |
| | LiF | Masse | 7,8 g = 0,3 mol |
| b) | Phosphortrichlorid | Masse | 44,9 g = 0,33 mol |
| | HF | Masse | 109,4 g = 5,47 mol |
| | $Cl_2$ | Masse | 26,2 g = 0,37 mol |
| | LiF | Masse | 7,8 g = 0,3 mol |

In einem trockenen Versuchsreaktor aus Edelstahl wurden 7,8 g LiF vorgelegt und bei 150 °C unter Argon ausgeheizt. In einem Laborautoklaven wurde $PCl_3$ vorgelegt und auf -52 °C gekühlt, dann der HF zudosiert. Nach Abkühlung bis auf -58 °C erfolgte die $Cl_2$-Dosierung (Mengen jeweils wie unter a) genannt). Der Autoklav wurde dann aus dem Kühlbad entnommen und ein HCl/$PF_5$-Gasgemisch über das LiF im Versuchsreaktor geleitet. Nach Beendigung der Überleitung des Gasgemisches wurden erneut 7,8 g LiF in den Versuchsreaktor zum entstandenen $LiPF_6$ zugefügt. Mit den unter b) genannten Mengen wurde analog zur vorstehenden Herstellungsweise erneut ein HCl/$PF_5$-Gasgemisch erzeugt und über das $LiPF_6$/LiF-Gemisch im Versuchsreaktor geleitet. Das erhaltene $LiPF_6$ war gut kristallin und ließ sich ohne Entwicklung von sichtbaren Dämpfen mörsern.

Eine GC-Probe des den Autoklaven verlassenden und in der Kälte hydrolysierten $PF_5$-Gasgemisches zeigt an, daß es frei von $PF_3$ war.

**Beispiel 5:**

Herstellung von $LiPF_6$ aus LiF, $PCl_3$, $Br_2$ und HF

Reaktionen:

$$PCl_3 + 5HF + Br_2 \rightarrow PF_5 + 3HCl + 2\,HBr$$

$$PF_5 + LiF \rightarrow Li\,PF_6$$

Ausgangsprodukte

| Ansatz: 1/10 Mol | |
|---|---|
| $PCl_3$ (137 g/Mol) d = 1,57 g/cm$^3$ | 10 ml (incl. 10 % Übersch.) |
| HF (20 g/Mol) d = 1 g/cm$^3$ | 80 ml |
| $Br_2$ (160 g/Mol) | 16 g |
| LiF (25,94 g/Mol) | 2,0 g (= 0,075 mol) |
| HF (als Lösemittel für LiF) | 165,3 g = 8,26 mol |

Der Autoklav, 80 ml HF und 10 ml $PCl_3$ wurden zunächst jeweils auf Trockeneis vorgekühlt. Das HF und Brom wurden dann im Autoklaven vereinigt (das Brom wurde sofort fest) und das $PCl_3$ zugegeben. Der Autoklav wurde verschlossen und auf Raumtemperatur gebracht. Der Druck stieg auf 18 bar an.

In einer PFA-Waschflasche wurde das LiF in 165,3 g HF vorgelegt und auf Trockeneistemperatur heruntergekühlt. Dann wurde die aus dem Laborautoklaven entweichende Gasphase eingeleitet. Anschließend wurde der überschüssige HF ausgeblasen, der beim Abkühlen ausfallende Feststoff abfiltriert und dann gemörsert.

Ausbeute: 1,9 g an $LiPF_6$ (16,7 %).

**Patentansprüche**

1. Verfahren zur Herstellung von Verbindungen der Formel $LiMF_6$, worin M für P oder As steht, wobei man ein Reaktionsprodukt bildet durch Umsetzung von $MX_3$, worin M die obengenannte Bedeutung besitzt und X Fluor, Chlor oder Brom bedeutet, mit elementarem Chlor, Brom oder Jod sowie HF, und man das Reaktionsprodukt bei oder nach seiner Bildung mit einem Lithiumhalogenid kontaktiert.

2. Verfahren nach Anspruch 1, dadurch gekennzeichnet, daß M für P steht.

3. Verfahren nach Anspruch 1 oder 2, dadurch gekennzeichnet, daß man von Phosphortrichlorid ausgeht.

4. Verfahren nach einem der vorhergehenden Ansprüche, dadurch gekennzeichnet, daß man elementares Chlor oder Brom, vorzugsweise elementares Chlor, einsetzt.

5. Verfahren nach Anspruch 1, dadurch gekennzeichnet, daß man als Lithiumhalogenid LiF oder LiCl einsetzt.

6. Verfahren nach Anspruch 5, dadurch gekennzeichnet, daß man LiF einsetzt.

7. Verfahren nach Anspruch 6, dadurch gekennzeichnet, daß man ein Lösemittel für LiF einsetzt.

8. Verfahren nach Anspruch 7, dadurch gekennzeichnet, daß man HF oder $CH_3CN$ als Lösemittel einsetzt.


**Claims**

1. A method for the preparation of compounds of the formula $LiMF_6$, wherein M stands for P or As, wherein a reaction product is formed by the reaction of $MX_3$, wherein M has the meaning given above and X is fluorine, chlorine or bromine, with elemental chlorine, bromine or iodine and also HF, and the reaction product is contacted with a lithium halide during or after its formation.

2. A method according to Claim 1, characterised in that M stands for P.

3. A method according to Claim 1 or 2, characterised in that the starting compound is phosphorus trichloride.

4. A method according to one of the preceding claims, characterised in that elemental chlorine or bromine, preferably elemental chlorine, is used.

5. A method according to Claim 1, characterised in that LiF or LiCl is used as lithium halide.

6. A method according to Claim 5, characterised in that LiF is used.

7. A method according to Claim 6, characterised in that a solvent for LiF is used.

8. A method according to Claim 7, characterised in that HF or $CH_3CN$ is used as a solvent.


**Revendications**

1. Procédé de préparation de composés de formule $LiMF_6$, dans laquelle M représente P ou As, où l'on forme un produit réactionnel par réaction de $MX_3$, où M a la signification donnée ci-dessus et X représente un fluor, un chlore ou un brome, avec du chlore, du brome ou de l'iode élémentaire ainsi qu'HF, et où l'on met en contact le produit réactionnel, lors de ou après sa formation, avec un halogénure de lithium.

2. Procédé selon la revendication 1, caractérisé en ce que M représente P.

3. Procédé selon la revendication 1 ou 2, caractérisé en ce qu'on part de trichlorure de phosphore.

4. Procédé selon l'une des revendications précédentes, caractérisé en ce qu'on utilise du chlore ou du brome élémentaire, de préférence du chlore élémentaire.

**5.** Procédé selon la revendication 1, caractérisé en ce qu'on utilise comme halogénure de lithium LiF ou LiCl.

**6.** Procédé selon la revendication 5, caractérisé en ce qu'on utilise LiF.

**7.** Procédé selon la revendication 6, caractérisé en ce qu'on utilise un solvant pour LiF.

**8.** Procédé selon la revendication 7, caractérisé en ce qu'on utilise HF ou $CH_3CN$ comme solvant.